# EUROPEAN PATENT APPLICATION

(11) **EP 4 755 488 A1**
(43) Date of publication of application: **10.06.2026**
(21) Application number: 24218478.6
(22) Date of filing: 09.12.2024
(51) Int. Cl.: B01D 29/11, B01D 29/33, B01D 29/58, B01D 35/02, B01D 35/027

(54) **(PRE-)FILTRATION UNIT FOR (PRE-)FILTERING OF A FLUID TO BE FILTERED, FILTRATION SYSTEM AND METHOD OF MANUFACTURING**

(71) Applicant: Sartorius Stedim Biotech GmbH, 37079 Göttingen (DE)
(72) Inventor: Bozic, Klemen, 5270 Ajdovscina (SI); Korenc, Matevz, 5270 Ajdovscina (SI); Sekirnik, Rok, 5270 Ajdovscina (SI); Pfaffenbichler, Ulrike, 1030 Wien (AT); Lausch, Ralf, 37079 Göttingen (DE); Meyer, Jens, 37079 Göttingen (DE); Raddatz, Lukas, 37079 Göttingen (DE); Bendall, Richard, Gloucestershire, Stonehouse, GL10 3UT (GB); Cernigoj, Urh, 5270 Ajdovscina (SI)
(74) Representative: Müller-Boré & Partner Patentanwälte PartG mbB

(57) **Abstract**

The invention relates to a (pre-)filtration unit for (pre-)filtering of a fluid to be filtered, in particular a fluid containing floccules, wherein the (pre-)filtration unit comprises: a first filter stage comprising a first filter body defining an inner volume, the first filter body comprising a first filter mesh for filtering the fluid to be filtered; and a second filter stage comprising a second filter body arranged within the inner volume of the first filter body, the second filter body comprising a second filter mesh for filtering the fluid to be filtered; and wherein a mesh size of the first filter mesh is different than a mesh size of the second filter mesh.

## Description

The present disclosure relates to a (pre-)filtration unit for (pre-)filtering a fluid to be filtered, a filtration system comprising a (pre-)filtration unit, use of a (pre-)filtration unit for (pre-)filtering a fluid containing floccules and a method for manufacturing a (pre-)filtration unit.

Filtration of fluids from unwanted or even harmful components, in particular solid or semi-solid material, is crucial for product quality and process reliability. Obtaining a substantially cleared filtrate, e.g., for further processing, is particularly important in the field of biochemistry and medicine.

As an example, production of pDNAs used for vaccines, gene therapy vectors or precursors for the production of therapeutic viral vectors and mRNA vaccines, typically involves microbial fermentation. For isolation of target pDNA, the bacterial host-cell contaminants need to be removed. Methods of isolation of pDNA may include a cell lysis step in the presence of strong base (alkaline lysis), neutralization, precipitation and clarification to recover the extra-chromosomal sequence(s) in the solution obtained from precipitated host-cell contaminants.

Clarification is typically performed with a filtration train comprising several process filters having different filter properties, in particular different pore sizes.

However, alkaline lysis produces large floccules, which result in clogging of the process filters, in particular of a crude process filter first in line. At present, heavily oversized crude process filters are provided in order to avoid or at least reduce the risk of clogging of the crude process filter. The crude process filters require high amounts of material, are expensive and voluminous so that the filter trains produce high amounts of waste, are high cost and require a large space.

It is therefore an object of the present invention to provide a more sustainable (pre-)filtration unit for (pre-)filtering of a fluid to be filtered.

### Summary of the Invention

One aspect of the present invention relates to a (pre-)filtration unit for (pre-)filtering of a fluid to be filtered, in particular a fluid containing floccules, e.g. a fluid containing cell lysate and/or a fluid containing larger floccules as e.g. appearing after cell lysis, wherein the (pre-)filtration unit comprises: a first filter stage comprising a first filter body defining an inner volume, the first filter body comprising a first filter mesh for filtering the fluid to be filtered; and a second filter stage comprising a second filter body arranged within the inner volume of the first filter body, the second filter body comprising a second filter mesh for filtering the fluid to be filtered and wherein a mesh size of the first filter mesh is different than a mesh size of the second filter mesh.

In one example, the mesh size of the first filter mesh may be larger than the mesh size of the second filter mesh, respectively, the mesh size of the second filter mesh may be smaller than the mesh size of the first filter mesh. Accordingly, the first filter body may be a coarse filter body comprising a coarse filter mesh for coarse filtering the fluid to be filtered to collect a coarse filtrate within the inner volume of the coarse filter body; and the second filter body may be a fine filter body comprising a fine filter mesh for fine filtering the coarse filtrate from within the inner volume of the coarse filter body to obtain a fine filtrate within an inner volume of the fine filter body.

In other words, the present invention relates to a (pre-)filtration unit for (pre-)filtering of a fluid to be filtered, in particular a fluid containing floccules, e.g. a fluid containing cell lysate and/or a fluid containing larger floccules as e.g. appearing after cell lysis, wherein (pre-)filtration unit comprises: a first filter stage comprising a coarse filter body defining an inner volume, the coarse filter body comprising a coarse filter mesh for coarse filtering the fluid to be filtered to collect a coarse filtrate within the inner volume of the coarse filter body; and a second filter stage comprising a fine filter body arranged within the inner volume of the coarse filter body, the fine filter body comprising a fine filter mesh for fine filtering the coarse filtrate from within the inner volume of the coarse filter body to obtain a fine filtrate.

In this example, the (pre-)filtration unit is preferably submerged in the fluid to be filtered and the fluid to be filtered flows towards the inside of the (pre-)filtration unit through the first filter stage and thereafter through the second filter stage. More specifically, the fluid to be filtered flows into the inner volume of the coarse filter body through the coarse filter mesh such that the floccules are filtered and retained outside the coarse filter body. Accordingly, the coarse filtrate being collected in the inner volume of the coarse filter body may be further filtered by flowing through the fine filter mesh of the fine filter body to obtain a fine filtrate inside the inner volume of the fine filter body. This allows an advantageous placement of the (pre-)filtration unit inside the fluid to be filtered.

In another example, the mesh size of the first filter mesh may be smaller than the mesh size of the second filter mesh, respectively, the mesh size of the second filter mesh may be larger than the mesh size of the first filter mesh. Accordingly, the second filter body may be a coarse filter body comprising a coarse filter mesh for coarse filtering the fluid to be filtered, wherein the fluid to be filtered flows from within an inner volume of the coarse filter body through the coarse filter mesh to obtain a coarse filtrate to be collected outside the coarse filter body and within an inner volume of the first filter body wherein the first filter body may be a fine filter body comprising a fine filter mesh for fine filtering the coarse filtrate.

In other words, a (pre-)filtration unit for (pre-)filtering of a fluid to be filtered, in particular a fluid containing floccules, e.g. a fluid containing cell lysate and/or a fluid containing larger floccules as e.g. appearing after cell lysis, may comprise: a first filter stage comprising a fine filter body defining an inner volume and a second filter stage comprising a coarse filter body, the coarse filter body arranged within the inner volume of the fine filter body; wherein the coarse filter body comprises a coarse filter mesh for coarse filtering the fluid to be filtered; the fine filter body comprising a fine filter mesh for fine filtering the coarse filtrate, the coarse filtrate collected within the inner volume of the fine filter body and outside the coarse filter body, the coarse filtrate filtered by the fine filter mesh of the fine filter body to obtain a fine filtrate to be collected outside of the fine filter body.

In this example, the fluid to be filtered is preferably fed into the inside of the (pre-)filtration unit and flows towards the outside through the second filter stage and thereafter through the first filter stage. More specifically, the fluid to be filtered is fed into the inner volume of the coarse filter body and flows through the coarse filter mesh such that the floccules are filtered and retained within the volume of the coarse filter body. Accordingly, the coarse filtrate being collected outside the coarse filter body but inside the fine filter body and is further filtered by flowing through the fine filter mesh to obtain the fine filtrate outside of the fine filter body. This allows an advantageous capturing of the filtered floccules as they are contained within the (pre-)filtration unit. A respective (pre-)filtration unit is particularly advantageous for being positioned at the end of a feed tube for filtering the fluid to be filtered when entering a vessel or a bag.

A (pre-)filtration unit according to an aspect of the present invention advantageously (pre-)filters a fluid to be filtered, in particular a fluid containing floccules or clumps or solid matter ("floccules" in the following). The (pre-)filtration unit effectively prevents these from advancing to the downstream side, i.e., to the filtrate originating from the fluid to be filtered. In particular, a multi-stage filtration comprising at least a first filter stage and a second filter stage provides a fractioned separation of floccules of different size from the fluid.

In particular when used as a pre-filter, the (pre-)filtration unit provides optimized avoiding of clogging of process filters positioned downstream for further filtering of the obtained fine filtrate. Specifically, by pre-filtering the fluid to be filtered, said process filters may have increased sustainability, in particular reducing CO2 footprint, due to less material waste, and/or have a smaller dimension and/or reduced filter area, which safes space and costs.

A further advantage is that the (pre-)filtration unit is configured to be at least partially submerged in a vessel and/or container holding the fluid to be filtered, thereby requiring no additional space. Also, no tubing for guiding the fluid to be filter to or through the (pre-)filtration unit has to be provided. Inclusion of the (pre-)filtration unit into filtration systems is easy and low cost.

For example, the (pre-)filtration unit may be placed at a bottom of a vessel in which a crude lysate (fluid to be filtered) is collected. The (pre-)filtration unit (pre-)filters the crude lysate to obtain a filtrate that may be further processed.

Preferably, the coarse filter body and the fine filter body, in particular their respective filter meshs, comprise or consist of the same material. This may simplify manufacturing and/or handling of the (pre-)filtration unit.

It is preferred that said material is 3D printable, such as e.g. PLA, ABS, TPU and similar materials, in particular a biocompatible printing material, e.g., PA2200. 3D printing offers customization to specific needs and allows complex shapes.

Preferably, coarse filter body and the fine filter body, in particular their respective filter meshs, are substantially self-supporting so that they may maintain integrity of their shape on their own, i.e., without requiring an additional support structure.

Advantageously, the coarse filter body and the fine filter body are formed integrally with each other. This way, assembling of the (pre-)filtration unit is not required and/or a risk of a leakage, e.g. due to incorrect fit, is reduced.

In particular, the coarse filter body and/or the fine filter body may be 3D printed, preferably, integrally and/or forming a single-piece. This allows a compact design and an integral production process.

The (pre-)filtration unit may be a disposable single-use (pre-)filtration unit.

The coarse filter mesh may have a coarse mesh size and the fine filter mesh may have a fine mesh size in order to obtain a two-stage filtration.

The mesh size describes the size of the openings and/or holes and/or pores of the mesh. A large mesh size is advantageous for filtering large floccules. A small mesh size is advantageous for filtering small floccules.

The mesh size may be predetermined and/or predeterminable, preferably, in consideration of the size and amount of floccules forming in the fluid to be filtered.

For example, for (pre-)filtering a crude lysate, the mesh size may predetermined based on the size of floccules produced after neutralization and precipitation of the lysate.

Preferably, the fine mesh size of the second filter stage is finer than the coarse mesh size of the first filter stage. This is particularly advantageous as this offers a sequential filtering of floccules of different sizes by the first filter stage and the second filter stage.

For example, large floccules are hindered by the coarse filter mesh from entering the inner volume of the coarse filter body. The coarse filtrate thereby obtained still comprises small floccules not filtered by the coarse filter mesh. Said small floccules may be hindered by the fine filter mesh from entering the inner volume of the fine filter body, thereby obtaining the fine filtrate. The fine filtrate may still comprise very small floccules, which are sufficiently small and/or flexible as to pass through the fine filter mesh. Nonetheless, a sufficiently (pre-)cleared filtrate for further processing, e.g., further filtering, may be obtained.

The mesh size may correspond, for example, to a diameter or a radius of the openings and/or holes and/or pores of the mesh, in particular if they have a substantially or approximately round form and/or shape. Alternatively, in particular if openings and/or holes and/or pores of the mesh have a substantially rectangular or polygonal form and/or shape, the mesh size may correspond to a side length and/or sedge length or a diagonal thereof.

Accordingly, the coarse filter mesh and/or the fine filter mesh may comprise openings and/or holes and/or pores having a substantially or approximately round or rectangular or polygonal form and/or shape. Rectangular openings and/or holes and/or pores are advantageous in particular when manufacturing by 3D printing. Also, little space between the openings and/or holes and/or pores is present. In this respect, hexagonal openings and/or holes and/or pores might be a good compromise between stability, size and material use.

The coarse mesh size may be between approximately 1 mm and approximately 5 mm, in particular between approximately 1.5 mm and approximately 3 mm, in particular approximately 2 mm.

The fine mesh size may be between approximately 0.5 mm and approximately 3 mm, in particular between approximately 0.8 mm and approximately 2 mm, in particular approximately 1 mm.

The (pre-)filtration unit may comprise an outlet tube extending outwardly from a top face of the coarse filter body and extending towards a bottom face of the coarse filter body into an inner volume defined by the fine filter body for discharging the fine filtrate from inside the inner volume of the fine filter body.

Preferably, the outlet tube is configured to fluidly couple with a hose and/or tube for extraction of the fine filtrate. In particular, a vacuum and/or underpressure applied through the hose and/or tube may suck the fine filtrate from the inner volume of the fine filter body, e.g., via a pump and/or peristaltic tubing.

The outlet tube extending towards a bottom face of the coarse filter body is particularly advantageous as a respective (pre-)filtration unit may be positioned at the bottom of a vessel, wherein a respective outlet tube allows sucking the fluid also from a level below the level of the top face of the coarse filter body in the vessel. Thus, dead volume may be reduced.

The top face and the bottom face of the coarse filter body may correspond to a cover face or base face of the coarse filter body and may be positioned on opposing sides of the coarse filter body. The top face and/or the bottom face may be oriented substantially parallel to one another and/or may be substantially flat. This is advantageous, as it allows placement of the (pre-)filtration unit plainly at the bottom of a vessel.

An inner end portion of the outlet tube positioned inside of the fine filter body may be in close proximity to the bottom face of the coarse filter body. This way, the (pre-)filter unit is configured to suck fluid from very close to the bottom of the vessel so that only a small amount of the fluid to be filtered remains in the vessel.

The inner end portion of the outlet tube may correspond to the opening of the outlet tube positioned in the inner volume of the fine filter body.

The inner end portion of the outlet tube may be closer to the bottom face than to the top face of the coarse filter body.

The inner end portion of the outlet tube may be positioned within a clearance distance to the bottom face of the coarse filter body and/or to the bottom face of the fine filter body.

For example, the clearance distance between the bottom face and the inner end portion of the outlet tube may be between approximately 20 mm and approximately 1 mm, in particular between approximately 15 mm and approximately 3 mm, in particular approximately 5 mm.

In another example, the outlet tube may extend into the inner volume of the coarse filter body and/or the fine filter body up to between approximately 60 % and approximately 95 %, in particular approximately 85%, of the height of the coarse filter body, respectively, of the fine filter body.

The (pre-)filtration unit may comprise an outlet at a bottom face of the coarse filter body for discharging the fine filtrate from inside an inner volume defined by the fine filter body. A respective (pre-)filtration unit may be particularly advantageous for being positioned inside a (single-use bioreactor) bag and/or being coupled to a discharge port of a vessel.

The (pre-)filtration unit may be configured to be arranged at a discharge port of a bag, wherein the outlet of the (pre-)filtration unit may be fluidly coupled with a discharge port of the bag. This way, no additional tubing and/or coupling means are required for (pre-)filtering of the fluid to be filtered inside the bag by the (pre-)filtration unit. Thereby, a fast, space saving and easy set-up of the (pre-)filtration unit may be achieved.

In particular, the shape and/or form of the coarse filter body, in particular its bottom face, may be shaped so as to fit to the wall of the bag surrounding the discharge port.

As an example, the bottom face of the coarse filter body may be tapered in correspondence to a sloping lower wall of the bag. A respective configuration is particularly advantageous as it allows substantially complete emptying of the bag by extraction of the (pre-)filtered fluid through the discharge port while only floccules remain within the bag.

The coarse filter body and/or the fine filter body and/or their respective base face or cover face may comprise a cylindrical shape or a (truncated) cone shape or a cuboid shape or a star shape or a branched shape or any other shape that increases the filter surface for optimized filtration capacity.

Preferably, the coarse filter body and/or the fine filter body comprise a shape, which offers an increased filter surface in combination with a compact volume, thereby achieving an increased filter surface to volume ratio. A compact volume allows the (pre-)filtration unit to be placed into various vessels. A filter surface may correspond to an outer surface of the filter mesh.

A branched shape may comprise a plurality of branches similar to a tree or coral that extend from a central part. A respective shape provides a particularly increased filter surface at a compact volume.

An increased filter surface allows suction with comparable low vacuum and/or high flow rates, e.g., of approximately 1 L/min, and/or may avoid or at least reduce the risk of clogging.

The shape of the coarse filter body and of the fine filter body may be substantially identical or may be different.

A different shape may be advantageous if the required size of the filter surfaces differs significantly. For example, if a high amount of large floccules and a low amount of small floccules are present in the fluid to be filtered, an advantageous (pre-)filtration unit may comprise a large filter surface at the first filter stage and a low filter surface at the second filter stage. Accordingly, the coarse filter body may e.g. comprise a branched shape offering a large filter surface wherein the fine filter body positioned within the coarse filter body may comprise a cylindrical shape with a significantly smaller filter surface.

An inverted configuration, i.e., the filter surface of the fine filter body being larger than the filter surface of the coarse filter body, may be advantageous if less large floccules and more small floccules passing through the coarse filter mesh of the coarse filter body are present in the fluid to be filtered so as to avoid or at least reduce the risk of clogging of the fine filter mesh of the fine filter body.

A ratio between the filter surface of the coarse filter body and the filter surface of the fine filter body may be between approximately 1:10 and approximately 10:1, in particular between approximately 1:3 and 3:1, in particular 2:1.

The filter surface of the coarse filter body and/or the fine filter body may be between approximately 3.000 mm² and approximately 100.000 mm², in particular between approximately 5.000 mm² and approximately 40.0000 mm². For example, the filter surface of the coarse filter body is approximately 16.273 mm² or approximately 298.758 mm². For example, the filter surface of the fine filter body is approximately 5.332 mm² or approximately 9.633 mm².

A ratio between an inner volume of the coarse filter body and an inner volume of the fine filter body may be between approximately 1:10 and approximately 1:2, respectively between approximately 10:1 and approximately 2:1 in case the coarse filter body is positioned at least partially within the fine filter body.

The inner volume of the coarse filter body may be between approximately 3.000 mm³ (3 mL) and approximately 55.000.000 mm³ (55 L), in particular between approximately 5.000 mm³ (5 mL) and approximately 100.000 mm³ (100 mL). For example, the inner volume of the coarse filter body is approximately 15.036 mm³. For example, the inner volume of the fine filter body is approximately 5.113 mm³.

Due to the position of the fine filter body within the coarse filter body, the inner volume of the fine filter body is smaller than the inner volume of the coarse filter body. It is advantageous that a gap and/or a distance between the inner side of the coarse filter mesh and the outer side of the fine filter mesh is present. In said gap, the coarse filtrate is collected and floccules blocked by the fine filter mesh may accumulate.

A gap large enough so that the accumulated small floccules do not block all of the openings and/or holes and/or pores of the coarse filter mesh, thereby ensuring replenishment of coarse filtrate in the inner volume of the coarse filter body may be advantageous

Thus, depending on the amount of floccules expected to pass through the coarse filter mesh and being blocked by the fine filter mesh, the gap may be accordingly designed. The larger the amount of said floccules, the larger the gap may may be advantageous.

The coarse filter body and the fine filter body may be arranged substantially coaxially to one another. In other words, their respective central axes may be substantially aligned. This way, in case the coarse filter body and the fine filter body comprise an identical shape, the gap in the radial direction between the coarse filter body and the fine filter body is substantially constant so that a filter capacity is substantially uniform along the circumference of the (pre-)filtration unit.

Alternatively, the fine filter body may be arranged at an offset to the central axis of the coarse filter body. This may be advantageous for example if the (pre-)filtration unit is placed near a wall of a vessel so that fluid to be filtered enters the coarse filter body not uniformly along its circumference. The fine filter body may be offset in a direction towards the wall of the vessel, thereby leaving a larger gap in a direction towards the center of the vessel, thereby increasing filter capacity in said direction.

The (pre-)filtration unit may further comprise a third filter stage comprising a third filter body arranged within the inner volume of the second filter body.

In particular, the (pre-)filtration unit may further comprise as third filter stage a superfine filter body arranged within the inner volume of the fine filter body, the superfine filter body comprising a superfine filter mesh for superfine filtering the fine filtrate from within the inner volume of the fine filter body to obtain a superfine filtrate. This may be advantageous if a further filtration of the fine filtrate and/or a filtration with smaller graduation of mesh size per filter stage may be desired.

The superfine filter mesh may have a superfine mesh size which may be finer than the fine mesh size.

The superfine mesh size may be between approximately 0.1 mm and approximately 1.5 mm, in particular between approximately 0.3 mm and approximately 1 mm, in particular approximately 0.5 mm.

In this case, the outlet or the outlet tube may be configured to discharge the superfine filtrate from inside an inner volume of the superfine filter body.

Another aspect of the present invention relates to a filtration system for filtering a fluid to be filtered, in particular a fluid containing floccules, e.g. a fluid containing cell lysate and/or a fluid containing larger floccules as e.g. appearing after cell lysis, wherein the filtration system comprises: a (pre-)filtration unit according to an aspect disclosed herein for pre-filtering the fluid to be filtered and obtaining a pre-filtered fluid; a first process filter fluidly coupled with an outlet of the (pre-)filtration unit and a second process filter fluidly coupled to an outlet of the first process filter for further filtering the pre-filtered fluid.

A respective filtration system provides the advantage that the (pre-)filtration unit prefilters the fluid to be filtered so that the required filtration surface of the first process filter may be significantly lower, which provides a sustainability, cost and space benefit. Also, risk of clogging of the first process filter is reduced.

For example, the first process filter may comprise a mesh size of approximately 50 µm and the second process filter may comprise a mesh size of approximately 0.45 µm. Said example may be particularly advantageous for filtering a fluid containing flocucles, such as e.g. a cell lysate, for further processing.

Another aspect of the present invention relates to a use of a (pre-)filtration unit according to an aspect disclosed herein for (pre-)filtering a fluid containing floccules, e.g. a fluid containing cell lysate and/or a fluid containing larger floccules as e.g. appearing after cell lysis.

Another aspect of the present invention relates to a method of manufacturing a (pre-)filtration unit according to an aspect disclosed herein comprising manufacturing, at least a part of, preferably, the entirety of, the coarse filter body and/or, at least a part of, preferably, the entirety of, the fine filter body using a 3D printing technique.

Preferably, the coarse filter body and the fine filter body are manufactured integrally and/or in a single piece and/or in a single printing process, which lowers costs, increases integrity and offers superior design freedom.

Also, 3D printing of at least the coarse filter body and the fine filter body provides the advantage that the design and/or shape of the filter bodies may be designed easily according to particular needs.

The method may include manufacturing the (pre-)filtration unit integrally with a bag, in particular a single-use bioreactor bag, or a process filter of a filtration system or a tubing. Manufacturing integrally in particular corresponds to printing the (pre-)filtration unit directly on or to a bag or a process filter or a tubing such that a substantially integral unit is obtained.

This is particularly advantageous for upgrading a consisting and/or pre-manufactured bag or process filter or tubing with a (pre-)filtration unit according to an aspect herein.

Another aspect of the present invention relates to a bag, in particular a single-use bioreactor bag, comprising a (pre-)filtration unit according to an aspect herein provided at a discharge port of the bag. Optionally, the (pre-)filtration unit is provided integrally with the discharge port of the bag.

A respective bag including the (pre-)filtration unit is advantageous because an already (pre-)filtered fluid may be discharged therefrom without necessity of providing an additional or a separate filter device, which is space saving and easy to set-up.

The present invention is further explained in detail by the following detailed description and the appended drawings, in which particular embodiments are illustrated by way of example, wherein the present invention is in no way limited by these particular embodiments.

### Brief description of the drawings

- Fig. 1: shows a schematic of an exemplary (pre-)filtration unit;
- Fig. 2: shows a cross-sectional view of an exemplary (pre-)filtration unit in a vessel;
- Fig. 3: shows the first filter stage and the second filter stage of an exemplary (pre-)filtration unit;
- Fig. 4a: shows an exemplary (pre-)filtration unit comprising a coarse filter body having a substantially cylindrical shape;
- Fig. 4b: shows an exemplary (pre-)filtration unit comprising a coarse filter body having a branched shape;
- Fig. 5: shows an exemplary filtration system comprising a (pre-)filtration unit and a first and second process filter;
- Fig. 6: shows an exemplary filtration system comprising a (pre-)filtration unit positioned within a bag holding the fluid to be filtered.

### Description of particular embodiments

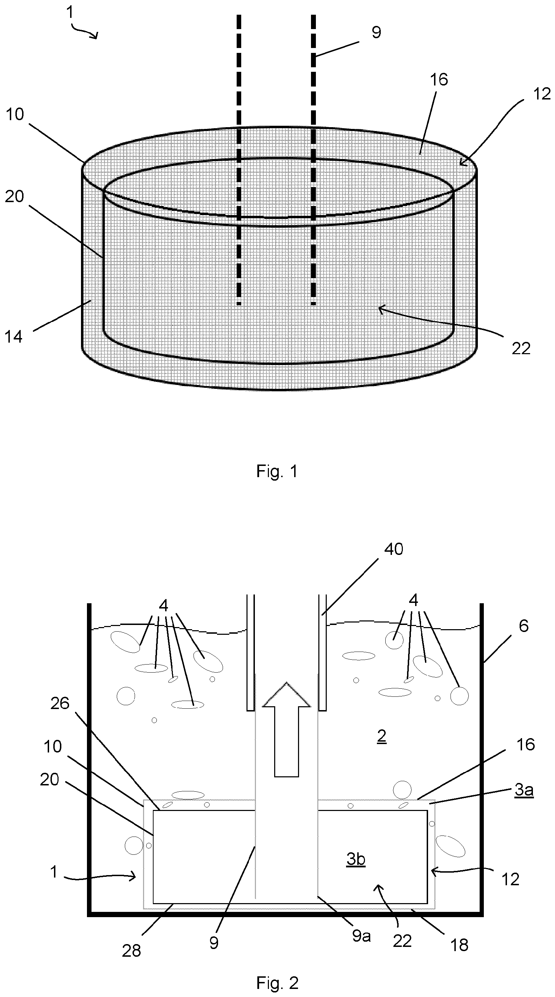

**Fig. 1** shows a schematic of an exemplary (pre-)filtration unit 1 comprising a coarse filter body 10 and a fine filter body 20 positioned within the coarse filter body 10.

More specifically, the coarse filter body 10 constitutes the first filter stage of the shown (pre-)filtration unit 1, wherein the coarse filter body 10 comprises a substantially cylindrical shape. A top face 16 and a bottom face 18 are substantially circular and opposed to one another. The coarse filter body 10 comprises a coarse filter mesh 14 forming at least a part, preferably substantially the entirety, of the shell and/or wall of the coarse filter body 10.

The coarse filter body 10 comprises an inner volume 12, which is framed and/or enclosed by the coarse filter mesh 14.

The coarse filter mesh 14 comprises a plurality of openings and/or holes and/or apertures for allowing fluid to pass through the coarse filter mesh 14 into the inner volume 12 of the coarse filter body 10.

The coarse filter mesh 14 hinders floccules and solid matter 4 to enter the inner volume 12 of the coarse filter body 10, thereby filtering the fluid to be filtered 2 to obtain a coarse filtrate 3a in the inner volume 12 of the coarse filter body 10.

The coarse filter mesh 14 comprises a coarse mesh size, which refers to a size and/or diameter and/or radius of the plurality of openings and/or holes and/or apertures of the coarse filter mesh 14.

The fine filter body 20 comprises an inner volume 22, which is framed and/or enclosed by the fine filter mesh 24. The inner volume 22 of the fine filter body 20 is smaller than the inner volume 12 of the coarse filter body 10.

The fine filter mesh 24 comprises a plurality of openings and/or holes and/or apertures for allowing fluid to pass through the fine filter mesh 24 into the inner volume 22 of the fine filter body 20. The fine filter mesh 24 hinders floccules 4 and solid matter being present in the coarse filtrate 3a to enter the inner volume 22 of the fine filter body 20, thereby further filtering the fluid to be filtered 2 to obtain a fine filtrate 3b in the inner volume 22 of the fine filter body 20.

The fine filter mesh 24 comprises a fine mesh size, which refers to a size and/or diameter and/or radius of the plurality of openings and/or holes and/or apertures of the fine filter mesh 24.

In the shown example, the openings and/or holes and/or apertures of the coarse filter mesh 14 have a substantially square shape with a side length of approximately 2 mm. The openings and/or holes and/or apertures of the fine filter mesh 24 have a substantially square shape with a side length of approximately 1 mm.

Thus, the shown exemplary (pre-)filtration unit 1 constitutes a two-stage filtration capable of substantially clearing the fluid to be filtered 2 from floccules 4 being larger than approximately the fine mesh size, i.e., 1 mm. The larger floccules 4 are held back by the coarse filter mesh 14 of the coarse filter mesh body 10, which constitutes the first filter stage. The smaller floccules 4 are held back by the fine filter mesh 24 of the fine filter body 20, which constitutes the second filter stage.

Due to the two-stage filtration performed by the coarse filter body 10 and the fine filter body 20, which are effectively fluidly connected in series but nested within one another, clearing of the fluid to be filtered 2 is efficiently achieved at a compact volume.

The shown example further comprises an outlet tube 9, which extends from an outer side of the coarse filter body 10 into the inner volume 22 of the fine filter body 20 so as to allow extraction of the fine filtrate 3b.

**Fig. 2** shows a cross-sectional view of an exemplary (pre-)filtration unit 1 in a vessel 6, which may be a plastic or glass container.

The vessel 6 holds the fluid to be filtered 2 and the (pre-)filtration unit 1 is submerged in said fluid to be filtered 2. More specifically, the (pre-)filtration unit 1 is positioned substantially at the bottom of the vessel 6.

The fluid to be filtered 2 comprises floccules 4 of different size, which shall be filtered out of the filtrate proceeding to further processing steps. The (pre-)filtration unit 1 is configured to hold back said floccules 4 and to provide a fine filtrate 3b for further processing.

The (pre-)filtration 1 comprises an outlet tube 9 for allowing extraction of the fine filtrate 3b.

The outlet tube 9 of the (pre-)filtration unit 1 is fluidly coupled with the inner volume 22 of the fine filter body 20 and is coupled with a tubing 40 at which a vacuum and/or underpressure may be applied so that the fine filtrate 3b is extracted from and/or sucked out of the inner volume 22 of the fine filter body 20.

In this example, the outlet tube 9 extends from and/or through the top face 16 of the coarse filter body 10 and the top face 26 of the fine filter body 20.

The outlet tube 9 preferably extends into the inner volume 22 of the fine filter body 20 up to close proximity to the bottom face 28 of the fine filter body 20. For example, a distance between the end portion 9a of the outlet tube 9 is arranged less than approximately 10 mm, preferably less than approximately 5 mm, away from the bottom face 28.

This way, a dead volume of the vessel 6 may be reduced, i.e., an amount of the fluid to be filtered 2 that may not be extracted through the (pre-)filtration unit 1 may be reduced, since the end portion 9a of the outlet tube 9 is close to the bottom of the vessel 6. Only the fluid to be filtered 2 below the level of the end portion 9a of the outlet tube 9 remains in the vessel 6.

In the shown example, the coarse filter body 10 and the fine filter body 20 have substantially the same shape and are positioned substantially coaxially. A distance between the shell face of the fine filter body 20 and the shell face of the coarse filter body 10 substantially corresponds to the difference of the respective radius' of the top and/or bottom face 16, 26, 18, 28 of the respective filter bodies 10, 20.

The volume between the coarse filter mesh 14 and the fine filter mesh 24, in which small floccules 4 may accumulate, may be designed according to specific needs. In particular, the size difference between the coarse filter body 10 and the fine filter body 20 may be designed based on the expected amount and size of the floccules 4 being present in the fluid to be filtered 2.

The respective top faces 16, 26 may also be distant to one another so that fluid may flow from an area between said top faces 16, 26 through a fine filter mesh 24 provided at the top face 26 of the fine filter body 20 into the inner volume 22 of the fine filter body 20. This further increases the filter surface of the fine filter body 20.

Also, the respective bottom faces 18, 28 may be distant to one another so that fluid may flow from an area between said bottom faces 18, 28 through a fine filter mesh 24 provided at the bottom face 28 of the fine filter body 20 into the inner volume 22 of the fine filer body 20. This further increases the filter surface of the fine filter body 20.

Alternatively, in particular the respective bottom faces 18, 28 may be substantially in contact with one another or even integral with each other. This way, a dead volume of the vessel 6 may be further reduced, i.e., an amount of the fluid to be filtered 2 that may not be extracted through the (pre-)filtration unit 1 may be further reduced, since the end portion 9a of the outlet tube 9 is even closer to the bottom of the vessel 6.

Optionally, at least a part of the bottom faces 18, 28 may be solid, i.e., does not comprise the coarse filter mesh 14 respectively the fine filter mesh 24 or does not comprise openings and/or holes and/or apertures. This may reduce manufacturing complexity while at the same time not substantially reducing filter capacity of the (pre-)filtration unit 1 since, when positioned at the bottom of a vessel 6, no or only little fluid will pass through a mesh arranged at the bottom faces 18, 28.

Alternatively or in addition, an area of the bottom face 28 of the fine filter body 20 at and/or around the inner end portion 9a of the outlet tube 9 may be solid and/or not comprise openings and/or holes and/or apertures so that the suction force applied at the outlet tube 9 may be distributed more evenly over the surface of the fine filter body 20.

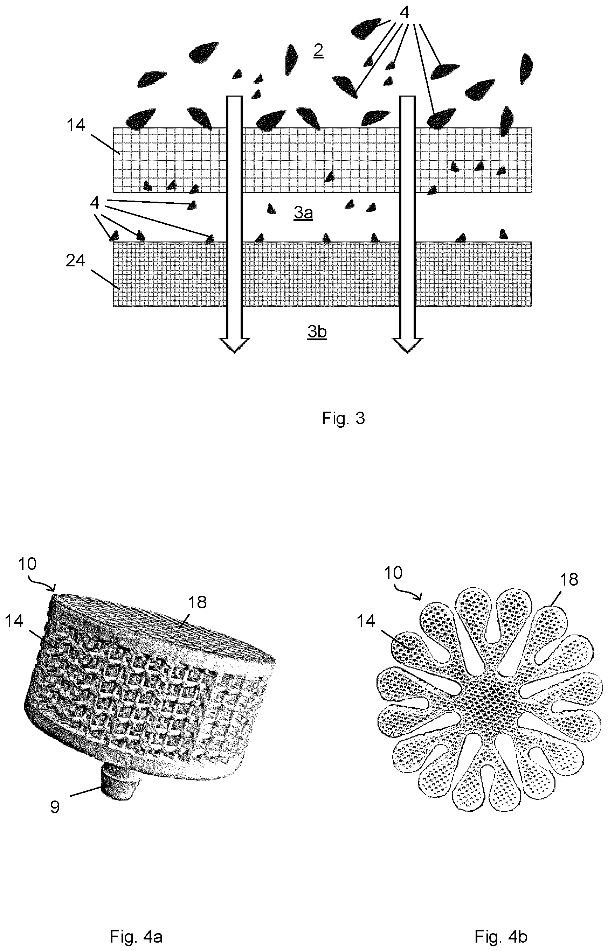

**Fig. 3** shows the first filter stage and the second filter stage of an exemplary (pre-)filtration unit 1.

The first filter stage comprises a coarse filter mesh 14, which is configured to hold back large floccules 4. The coarse filter mesh 14 has a coarse mesh size sufficiently small to hold back large floccules 4 being comprised by the fluid to be filtered 2 but sufficiently large to let small floccules 4 pass through the coarse filter mesh 14. This way, clogging of the coarse filter mesh 14 is prevented or at least reduced because only a part of the floccules 4 accumulate at the filter surface, i.e., the outer surface of the coarse filter mesh 14.

Coarse filtrate 3a is obtained on the downstream side of the coarse filter mesh 14, which has been substantially cleared from large floccules 4.

The coarse filtrate 3a is further filtered by the second filter stage, which comprises a fine filter mesh 24, which is configured to hold back small floccules 4. The fine filter mesh 24 has a fine mesh size sufficiently small to hold back small floccules 4 present in the fluid to be filtered 2.

Fine filtrate 3b is obtained on the downstream side of the fine filter mesh 24, which has been substantially cleared from large and small floccules 4.

However, in particular if the (pre-)filtration unit is configured to be provided as pre-filter in a filtration system in advance to further process filters, the fine mesh size may still be sufficiently large to let very small floccules 4 pass through the fine filter mesh 24 in order to prevent clogging of the fine filter mesh 24. In a respective filtration system, said very small floccules 4 will be filtered by further process filters, which comprise an even smaller mesh size in order to clear the fluid to be filtered 2 from substantially all floccules 4. Still, the (pre-)filtration unit 1 offers advantageous prefiltering of the fluid to be filtered 2 in order to protect the process filters downstream.

Since said further process filters are very expensive, providing the (pre-)filtration unit 1 as pre-filter for pre-filtering the fluid to be filtered 2 is advantageous because the process filters may be smaller in size due to less floccules 4 being in the fluid that reaches said process filters.

In the shown example, the openings and/or holes and/or apertures of the coarse filter mesh 14 have a substantially square shape with a side length of approximately 2 mm. The openings and/or holes and/or apertures of the fine filter mesh 24 have a substantially square shape with a side length of approximately 1 mm. These mesh sizes and the respective ratio is advantageous for efficient filtering at low manufacturing effort and cost.

**Fig. 4a** shows an exemplary (pre-)filtration unit 1 comprising a coarse filter body 10 having a substantially cylindrical shape. A respective shape provides a relatively large filter surface in a compact volume and robust design. Also, due to the substantially flat bottom face 16, the (pre-)filtration unit 1 may be positioned substantially levelled with a flat bottom of a vessel, for example a plastic or glass container and/or cup commonly used in lysis processes, thereby reducing the dead volume.

The shown (pre-)filtration unit 1 further comprises an outlet tube 9, which comprises a hose nozzle for coupling with a hose or tubing for the filtered fluid to be transferred to further process units and/or steps.

The fine filter body 20 (not shown) is housed within the coarse filter body 10. The fine filter body 20 may comprise substantially the same shape or another shape as the coarse filter body 10.

For example, the fine filter body 20 may comprise a star-shape and/or star-shaped top face 26 and bottom face 28 so that the filter surface of the fine filter body 20 is larger than the filter surface of the coarse filter body 10, even though the inner volume 22 of the fine filter body 20 is smaller than the inner volume 12 of the coarse filter body 10. This may be advantageous if many small floccules 4 are present in the fluid to be filtered 2, which are not blocked by the coarse filter mesh 14 of the coarse filter body 10. Accordingly, a large filter surface of the fine filter body 20 reduces risk of clogging because the small floccules 4 may accumulate over a large filter surface.

**Fig. 4b** shows an exemplary (pre-)filtration unit 1 comprising a coarse filter body 10 having a branched shape. A branched shaped may comprise a central area, from which a plurality of branches and/or arms spread in substantially radial directions, similar like a tree or corral.

A respective and similar shapes provide the advantage that a large filter surface is obtained with a small volume.

In the shown example, the fine filter body 20 (not shown) may have a substantially cylindrical shape and is positioned centrally within the coarse filter body 10. Thus, the filter surface of the fine filter body 20 is substantially smaller than the filter surface of the coarse filter body 10. The shown example may be particularly advantageous for (pre-)filtering a fluid to be filtered 2, which comprises large amounts of large floccules.

The shown (pre-)filtration unit 1, respectively its coarse filter body 10, comprises a substantially symmetrical shape so that filter capacity is substantially equally distributed around the radial circumference. However, the coarse filter body 10 may comprise an asymmetrical shape, which may be advantageous if the (pre-)filtration unit 1 is positioned close to a wall of the vessel 6 or another device inside the vessel 6, such as a valve. The same applies for a fine filter body 20.

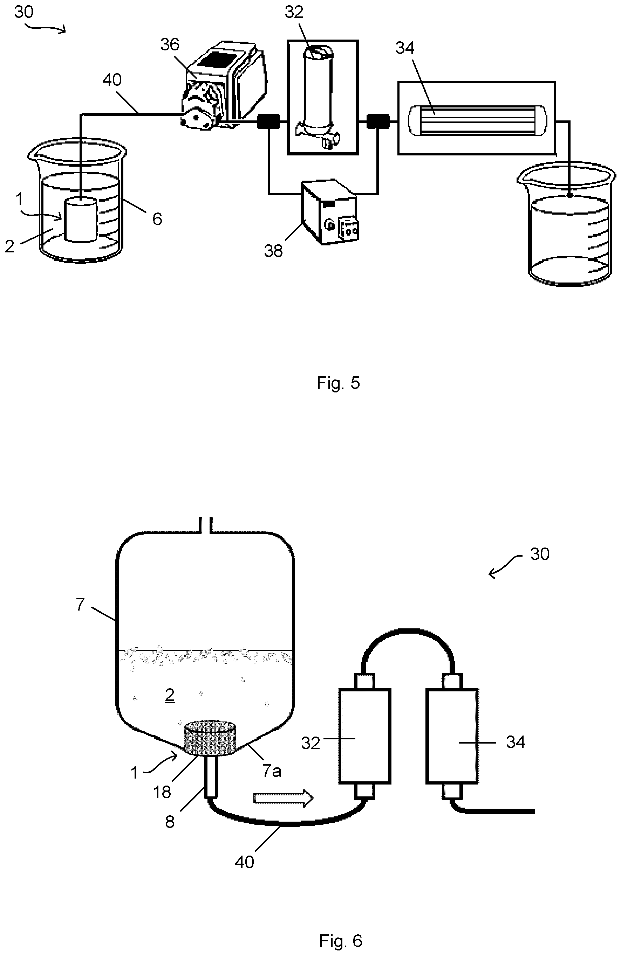

**Fig. 5** shows an exemplary filtration system 30 comprising a (pre-)filtration unit 1 and a first process filter 32 and a second process filter 34 fluidly coupled in series for filtering the fluid to be filtered 2.

The fluid to be filtered 2 is pre-filtered by the (pre-)filtration unit 1 being positioned in the vessel 6 holding the fluid to be filtered 2 so as to obtain a fine filtrate 3b, which is extracted via tubing 40 and suction force applied by a peristaltic pump 36 or other type of pump.

The fine filtrate 3b is pumped to the first process filter 32, which preferably comprises a mesh size smaller than the mesh size of the fine filter mesh 24 of the (pre-)filtration unit 1.

The fluid is further pumped to the second process filter 34, which preferably comprises a mesh size yet smaller than the mesh size of the first process filter 24.

The filtrate obtained is substantially cleared from floccules 4 and may be used for further processing.

The filtration system 30 may comprise further process filters for further filtering of the fluid.

Optionally, one or more further pumps may be provided. Also, one or more pressure sensors 38 for measuring pressure may be provided for better process control, in particular in front and behind the process filters 32, 34.

**Fig. 6** shows an exemplary filtration system 30 comprising a (pre-)filtration unit 1 positioned within a bag 7 holding the fluid to be filtered 2. The filtration system 30 further comprises a first process filter 32 and a second process filter 34 positioned outside the bag 7 and fluidly coupled in series to the (pre-)filtration unit 1 by tubing 40 for further filtering.

The bag 7 constitutes a particular example of a vessel 6.

The bag 7 may be a single-use bioreactor bag.

The (pre-)filtration unit 1 is positioned inside the bag 7 and placed at and/or coupled to a discharge port 7 of the bag 7. More specifically, an outlet of the (pre-)filtration unit 1 is coupled to the discharge port 7 substantially leak-tight so that the fluid may only be discharged through the discharge port 7 by passing through the filter stages of (pre-)-filtration unit 1.

In this example, the outlet of the (pre-)filtration unit 1 is positioned at the bottom face 18 of the coarse filter body 10. The outlet allows discharge of the fine filtrate 3b from the inner volume of the fine filter body 20. Optionally, an outlet tube 9 may be provided instead or in addition to the outlet.

Advantageously, the shape of the (pre-)filtration unit 1, in particular the shape of the bottom face 18 of the coarse filter body 10, substantially corresponds to and/or is uniform with the shape of the bottom wall 7a of the bag 7 where the coarse filter body 10 is positioned at and/or with which the coarse filter body 10 is in contact with.

For example, as shown in Fig. 6, the bag 7 has a sloped bottom wall 7a descending towards the central bottom part of the bag 7 where the discharge port 8 is positioned. A respective shape is of the bag 7 is advantageous for discharging substantially the entire fluid 2 from the bag 7 since the dead volume substantially does not exist or is only very small.

Thus, for the exemplary bag 7 shown in Fig. 6, the bottom face 18 of the coarse filter body 10 is advantageously shaped like a (truncated) cone with an angle substantially identical with the angle of the sloped bottom wall 7a of the bag 7.

A respective (pre-)filtration unit 1 is particularly advantageous as it allows seamless integration and/or substantially form-fit arrangement with a vessel 6, in particular a bag 7, which reduces required space and improves leak tightness.

### List of Reference Numerals

- 1: (Pre-)filtration unit
- 2: fluid to be filtered
- 3a: coarse filtrate
- 3b: fine filtrate
- 4: floccules
- 6: vessel
- 7: bag
- 7a: bottom wall of bag
- 8: discharge port
- 9: outlet tube
- 9a: end portion of outlet tube
- 10: coarse filter body
- 12: inner volume of coarse filter body
- 14: coarse filter mesh
- 16: top face of coarse filter body
- 18: bottom face of coarse filter body
- 20: fine filter body
- 22: inner volume of fine filter body
- 24: fine filter mesh
- 26: top face of fine filter body
- 28: bottom face of fine filter body
- 30: filtration system
- 32: first process filter
- 34: second process filter
- 36: peristaltic pump
- 38: pressure sensor
- 40: tubing

## Claims

1. (Pre-)filtration unit (1) for (pre-)filtering of a fluid to be filtered, in particular a fluid containing floccules, wherein the (pre-)filtration unit (1) comprises:
a first filter stage comprising a first filter body defining an inner volume, the first filter body comprising a first filter mesh for filtering the fluid to be filtered; and
a second filter stage comprising a second filter body arranged within the inner volume of the first filter body, the second filter body comprising a second filter mesh for filtering the fluid to be filtered; and
wherein a mesh size of the first filter mesh is different than a mesh size of the second filter mesh.

2. (Pre-)filtration unit (1) of claim 1, wherein the first filter body is a coarse filter body comprising a coarse filter mesh for coarse filtering the fluid to be filtered to collect a coarse filtrate within the inner volume of the coarse filter body; and
wherein the second filter body is a fine filter body comprising a fine filter mesh for fine filtering the coarse filtrate from within the inner volume of the coarse filter body to obtain a fine filtrate.

3. (Pre-)filtration unit (1) of claim 1 or 2, wherein the coarse filter body and/or the fine filter body is, respectively, are 3D printed.

4. (Pre-)filtration unit (1) of any one of the preceding claims, wherein the coarse filter mesh has a coarse mesh size and the fine filter mesh has a fine mesh size, wherein the fine mesh size is finer than the coarse mesh size; and, optionally,
wherein the coarse mesh size is between approximately 1 mm and approximately 5 mm, in particular between approximately 1.5 mm and approximately 3 mm; and/or
wherein the fine mesh size is between approximately 0.5 mm and approximately 3 mm, in particular between approximately 0.8 mm and approximately 2 mm.

5. (Pre-)filtration unit (1) of any one of the preceding claims, further comprising an outlet tube extending outwardly from a top face of the coarse filter body and extending into an inner volume defined by the fine filter body towards a bottom face of the coarse filter body for discharging the fine filtrate from inside the inner volume of the fine filter body.

6. (Pre-)filtration unit (1) of claim 5, wherein an inner end portion of the outlet tube positioned inside of the fine filter body is in close proximity to the bottom face of the coarse filter body, and/or wherein a clearance distance between the inner end portion of the outlet tube to a bottom face of the first filter body is between approximately 20 mm and approximately 1 mm, in particular between approximately 15 mm and approximately 3 mm.

7. (Pre-)filtration unit (1) of any one of claims 1 to 4, further comprising an outlet at a bottom face of the coarse filter body for discharging the fine filtrate from inside an inner volume defined by the fine filter body.

8. (Pre-)filtration unit (1) of any one of the preceding claims, wherein the coarse filter body and/or the fine filter body comprises a cylindrical shape or a cone shape or a cuboid shape or a star shape or a branched shape.

9. (Pre-)filtration unit (1) of any one of the preceding claims, wherein a ratio between a filter surface of the coarse filter body and a filter surface of the fine filter body is between approximately 1:10 and approximately 10:1; and/or
wherein a ratio between an inner volume of the coarse filter body and an inner volume of the fine filter body is between approximately 1:10 and approximately 1:2.

10. (Pre-)filtration unit (1) of any one of the preceding claims, wherein the coarse filter body and the fine filter body are arranged substantially coaxially to one another.

11. Filtration system for filtering a fluid to be filtered, in particular a fluid containing floccules, wherein the filtration system comprises:
a (pre-)filtration unit (1) according to any one of the preceding claims for pre-filtering the fluid to be filtered and obtaining a pre-filtered fluid;
a first process filter fluidly coupled with an outlet of the (pre-)filtration unit (1) and a second process filter fluidly coupled to an outlet of the first process filter for further filtering the pre-filtered fluid.

12. Use of a (pre-)filtration unit (1) according to any one of claims 1 to 10 for (pre-)filtering a fluid containing floccules.

13. Method of manufacturing a (pre-)filtration unit (1) according to any one of claims 1 to 10 comprising manufacturing the coarse filter body (10) and/or the fine filter body (20) using a 3D printing technique.

14. Method of manufacturing of claim 13, comprising manufacturing the (pre-)filtration unit (1) integrally with a bag (7), in particular a single-use bioreactor bag, or a process filter (32, 34) of a filtration system (30) or a tubing (40).

15. Bag (7), in particular a single-use bioreactor bag, comprising a (pre-)filtration unit (1) according to any one of claims 1 to 10 provided at a discharge port (8) of the bag (7).
